(19) **Europäisches Patentamt**
**European Patent Office**
**Office européen des brevets**

(11) **EP 3 739 820 B1**

(12) **EUROPEAN PATENT SPECIFICATION**

(45) Date of publication and mention
of the grant of the patent:
**13.10.2021  Bulletin 2021/41**

(51) Int Cl.:
*H04L 12/40* *(2006.01)*

(21) Application number: **19220052.5**

(22) Date of filing: **30.12.2019**

(54) **ESTABLISHING COMMUNICATION AT OPTIMIZED TIME INSTANCES**

KOMMUNIKATIONSAUFBAU BEI OPTIMIERTEN ZEITINSTANZEN

ÉTABLISSEMENT DE LA COMMUNICATION DANS DES INSTANCES DE TEMPS OPTIMISÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2019  CN 201910409242**

(43) Date of publication of application:
**18.11.2020  Bulletin 2020/47**

(73) Proprietor: **Sungrow Power Supply Co., Ltd.**
**Hefei, Anhui 230088 (CN)**

(72) Inventors:
• **Cui, Yuqing**
**Hefei, Anhui 230088 (CN)**
• **WANG, Xinyu**
**Hefei, Anhui 230088 (CN)**
• **ZHUANG, Fushuai**
**Hefei, Anhui 230088 (CN)**
• **ZHUANG, Jiacai**
**Hefei, Anhui 230088 (CN)**
• **XU, Jun**
**Hefei, Anhui 230088 (CN)**

(74) Representative: **Epping - Hermann - Fischer
Patentanwaltsgesellschaft mbH
Schloßschmidstraße 5
80639 München (DE)**

(56) References cited:
**US-A- 5 982 781        US-A1- 2007 081 548
US-A1- 2008 273 527**

## Description

### FIELD

The present disclosure relates to the field of communication technologies, and particularly to a communication method and a communication device for a multi-machine communication system and a multi-machine communication system.

### BACKGROUND

Multi-machine communication systems including multiple communication units are widely used in the field of data collection, energy management, automotive electronics and the like.

In a multi-machine communication system, various communication units establish communication after being powered on. The various communication units are powered on at different time instants, and establish communications at different time instants after being powered on. Therefore, it is possible that a communication unit receives only partial data of a data packet on a communication bus immediately after communication is established by the communication unit, and the partial data and partial data of a subsequent data packet are incorrectly determined as one data packet, resulting in continuous incorrect data packets, such that the communication unit cannot operate with the entire communication system and the entire communication system may break down.

In order to solve the above problem, during a communication process, a timer is started on reception of each data byte. If no new data is received before the expiration of the timer, it is determined that data is completely received; if new data is received before the expiration of the timer, the timer is restarted on reception of the new data, and it is determined that data is completely received on expiration of the timer.

In the above communication process, data is received with a byte as a basic unit, which greatly increases computation burden of the system. In addition, whether data is completely received is determined after a time delay, resulting in reduction in real-time performance of a system communication. Therefore, conventional communication methods are unsuitable for multi-machine communication systems having high requirements on real-time performance. US20080273527 A1 discloses a distributed system comprising a master node, multiple slave nodes and a bus. The multiple salve nodes are connected to the common bus via a respective link such that each node can see all of the information on the bus, and the master node is provided at the head of the bus and directs traffic over the bus to the nodes. A standard CAN controller resets the transmission object's New Data flag (NEWDAT) only if it has detected an idle bus and commenced the transmission procedure, so as to ensure single-shot transmissions.

### SUMMARY

The present invention is defined in the appended independent claims to which reference should be made. Advantageous features are set out in the appended dependent claims. By optimizing a time instant at which a communication unit establishes communication by calculating the duration for which a communication bus is occupied, incorrectly determined data packets of a system is avoided since communication is just established.

### BRIEF DESCRIPTION OF THE DRAWINGS

The drawings to be used in the description of the embodiments of the application or the conventional technology will be described briefly as follows, so that the technical solutions according to the embodiments of the present application or according to the conventional technology will become clearer. It is apparent that the drawings in the following description only illustrate some embodiments of the present application. For those skilled in the art, other drawings may be obtained according to these drawings without any creative work.

Figure 1 is a flowchart of a communication method for a multi-machine communication system according to an embodiment of the present disclosure;

Figure 2 is a flowchart of a method for establishing communication by a second communication unit according to an embodiment of the present disclosure;

Figure 3 is a flowchart of a method for calculating a duration for which a communication bus is occupied when a communication unit sends data to the communication bus according to an embodiment of the present disclosure;

Figure 4 is a schematic diagram showing a principle of a method for establishing communication by a communication unit in a multi-machine communication system according to an embodiment of the present disclosure;

Figure 5 is a schematic diagram showing a principle of a method for avoiding an incorrectly determined data packet by using a timer according to an embodiment of the present disclosure;

Figure 6 is a schematic structural diagram of a communication device for a multi-machine communication system according to an embodiment of the present disclosure;

Figure 7 is a schematic structural diagram of a communication device for a multi-machine communication system according to another embodiment of the present disclosure;

Figure 8 is a schematic structural diagram of a multi-machine communication system according to an embodiment of the present disclosure; and

Figure 9 is a schematic structural diagram of a multi-machine communication system according to another embodiment of the present disclosure.

## DETAILED DESCRIPTION OF THE EMBODIMENTS

Technical solutions according to embodiments of the present disclosure are described clearly and completely hereinafter in conjunction with drawings used in the embodiments of the present disclosure. Apparently, the described embodiments are only some embodiments of the present disclosure rather than all the embodiments. Any other embodiments obtained by those skilled in the art based on the embodiments of the present disclosure without any creative work fall in the scope of protection of the present disclosure.

A communication method for a multi-machine communication system is provided according to the present disclosure. The multi-machine communication system may be a single-bus multi-machine communication system including a single communication bus or a multi-bus multi-machine communication system including multiple communication buses. Taking a single-bus multi-machine communication system for example, a multi-machine communication system includes a communication bus and multiple communication units, where the multiple communication units are connected to the same communication bus. After initialization of the multi-machine communication system, a communication unit is selected from the multiple communication units in the multi-machine communication system as a first communication unit while a communication unit of the multiple communication units other than the first communication unit functions as a second communication unit. The first communication unit first establishes communication and sends data to the communication bus after the initialization of the multi-machine communication system. According to the present disclosure, by optimizing the time instant at which a communication unit establishing communication, an incorrectly determined data packet during communication of the communication system is avoided since communication is just established.

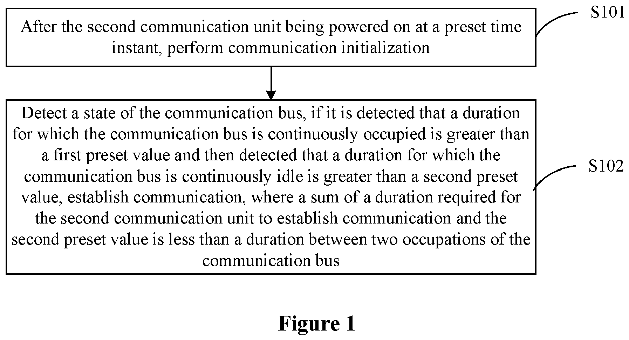

Reference is made to Figure 1, which is a flowchart of a communication method for a multi-machine communication system. The method is applied to a second communication unit, which includes the following step S101 and step S102.

In step S101, the second communication unit is powered on at a preset time instant and performs communication initialization after being powered on.

The multiple communication units are powered on separately at different preset time instants and perform communication initialization after being powered on.

The first communication unit is first powered on at a preset time instant. Then, the first communication unit performs communication initialization after being powered on and establishes communication. In an embodiment, the communication initialization includes the first communication initializing a communication module of the first communication unit and initializing communication establishing information.

The first communication unit establishing communication indicates that the first communication unit is capable of communicating with the second communication unit.

The second communication unit performs communication initialization with a method that is the same as the method for the first communication unit to perform communication initialization, which includes initializing a communication module of the second communication unit and initializing communication establishing information.

In step 102, a state of the communication bus is monitored. If it is detected that a duration for which the communication bus is continuously occupied is greater than a first preset value and then detected that a duration for which the communication bus is continuously idle is greater than a second preset value, communication is established, where a sum of a duration required for the second communication unit to establish communication and the second preset value is less than an idle duration between two occupations of the communication bus.

In a multi-machine communication system, in order to avoid crosstalk of communication data, at any time instant, only one communication unit is allowed to be in a state of sending data, while other communication units are in a state of receiving data. When any one of the communication units is in the state of sending data, the communication bus is occupied; when all communication units are in the state of receiving data, the communication bus is idle.

Different second communication units may establish communication at the same time instant. In order to avoid crosstalk of communication data, different second communication units send data at different time instants, that is, at any time instant, only one communication unit is allowed to be in the state of sending data while other communication units are in the state of receiving data.

It can be seen that the first communication unit is characterized in:

first establishing communication, and

first sending data to the communication bus in a preset communication period, where when the first communication unit sends data to the communication bus, the second communication unit is not allowed to send data to the communication bus.

It should be noted that, the first communication unit may be powered on prior to or subsequent to powering on of the second communication unit. However, the first communication unit necessarily establishes communication prior to establishment of communication by the second communication unit.

The second communication unit is characterized by:

establishing communication subsequent to establishment of communication by the first communication unit, and

being capable of sending data to the communication bus only after the first communication unit sends data, where

different second communication units are not allowed to simultaneously send data to the communication bus, different second communication units send data to the communication bus in a preset order and at preset time instants.

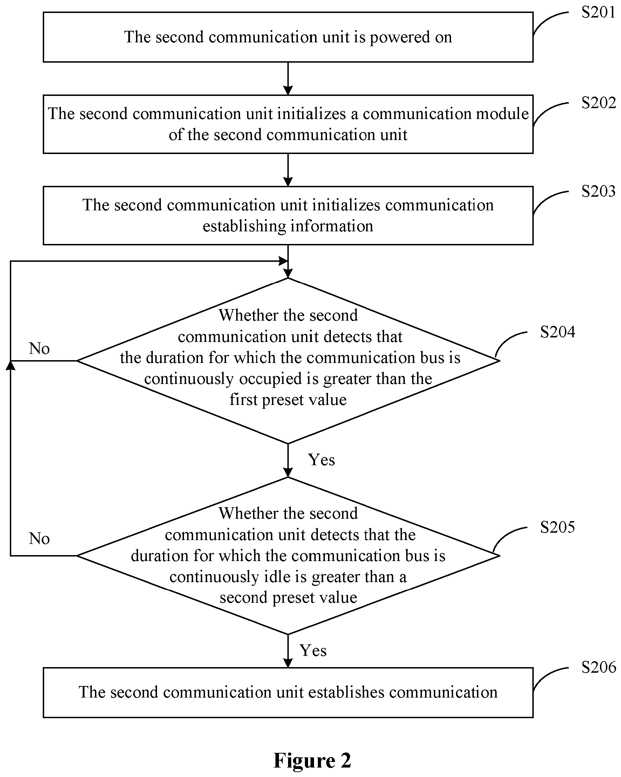

In an embodiment, referring to Figure 2, the second communication unit establishes communication through the following steps S201 to S204.

In step S201, the second communication unit is powered on.

In step S202, the second communication unit initializes a communication module of the second communication unit.

In step S203, the second communication unit initializes communication establishing information.

In step S204, the second communication unit detects whether a duration for which the communication bus is continuously occupied is greater than a first preset value.

Step 205 is performed if the duration for which the communication bus is continuously occupied is greater than the first preset value.

In step 205, the second communication unit detects whether a duration for which the communication bus is continuously idle is greater than a second preset value.

If the duration for which the communication bus is continuously idle is greater than the second preset value, step S206 is performed.

In step S206, the second communication unit establishes communication.

For each second communication unit, detecting that the duration for which the communication bus is continuously occupied is greater than the first preset value indicates that the communication bus is occupied. In order to avoid that the communication bus being occupied by an interference signal impacts the detection of the state of the communication bus by the second communication unit, the first preset value should be properly set.

The first preset value and the second preset value are both preset in a communication protocol of the multi-machine communication system. The communication protocol may be set by an upper computer in communication connection with the multi-machine communication system. The upper computer sends the communication protocol to the first communication unit and each second communication unit of the multi-machine communication system. Alternatively, the communication protocol may be written in the first communication unit and each second communication unit of the multi-machine communication system by other means.

Taking the upper computer sending the communication protocol to the first communication unit and each second communication unit of the multi-machine communication system as an example, the upper computer may calculate a duration for which the communication bus is occupied when each communication unit sends data to the communication bus, and set the first preset value based on the duration for which the communication bus is occupied when each communication unit sends data to the communication bus, where the first preset value is set to be less than the duration for which the communication bus is occupied when any one of the communication units sends data to the communication bus and to be greater than a duration for which the communication bus is occupied by an interference signal.

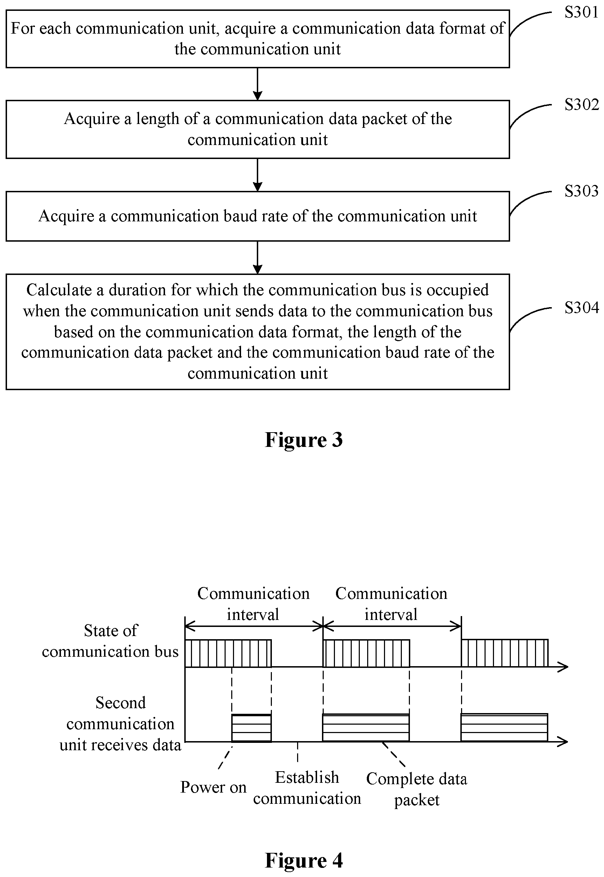

Reference is made to Figure 3, which is a flowchart of a method for calculating a duration for which a communication bus is occupied when a communication unit sends data to the communication bus according to an embodiment of the present disclosure. The method includes the following steps S301 to S304.

In step S301, for each communication unit, a communication data format of the communication unit is acquired.

The communication data format represents data bit composition of shortest valid data recognizable by the communication unit. The communication unit sends data and receives data in a preset communication data format.

For example, given a certain communication unit communicating data in a format of 3 bits of identification information + 8 bits of data, it is indicated that shortest valid data recognizable by the communication unit includes 11 bits, among which the length of data is 8 bits (1 byte = 8 bits).

In step S302, a length of a communication data packet of the communication unit is acquired.

The length of the communication data packet of each communication unit, when the communication unit works properly, includes a length of a data packet sent to the communication bus and a length of a data packet received from the communication bus.

For example, when the communication unit works properly, the length of the data packet sent to the communication bus and the length of the data packet received from the communication bus are both 10 bytes, it is indicated that the length of each communication data packet sent by the communication unit to the communication bus is 10 bytes, and one communication data packet is considered to be completely received each time when 10 bytes of data is received from the communication bus.

In step S303, a communication baud rate of the communication unit is acquired.

The baud rate refers to the number of communication data bits transmitted by a communication unit per unit time.

For example, given that a communication baud rate of the communication unit is 5 Mbps, the communication unit can continuously transmit 5000000 bits of data in one second, in other words, $0.2\mu s$ is required for the communication unit to send 1 bit of data.

In step S304, the duration for which the communication bus is occupied when the communication unit sends data to the communication bus is calculated based on the communication data format, the length of the communication data packet and the communication baud rate of the communication unit.

The duration for which the communication bus is occupied each time when the communication unit sends data to the communication bus equals to a total length of a data packet sent by the communication unit (unit: byte) times data bits corresponding to a single byte of data sent by the communication unit (unit: bit/byte), and times a time period required for the communication unit to send 1 bit of data (unit: s/bit).

For example, the duration for which the communication bus is occupied each time when the communication unit sends data to the communication bus is calculated with the following equation:

$$(10 \text{bytes}) * (11 \text{bits}/1 \text{byte}) * 0.2\mu s/\text{bit} = 22\mu s.$$

It should be noted that, data bits corresponding to a single byte of data sent by the communication unit herein includes the 8 bits of data and 3 bits of identification information, which corresponds to the communication data format. 11 data bits correspond to a single byte of data sent by the communication unit.

The first preset value is less than the duration for which the communication bus is occupied when the any one of the communication units sends data to the communication bus and greater than a duration for which the communication bus is occupied by an interference signal, such that the communication state of the communication bus can be accurately detected by the second communication unit, thereby avoiding the second communication unit incorrectly determining that the communication bus is occupied when the communication bus is occupied by an interference signal.

The second communication unit establishes communication in a case that the second communication unit detects that the duration for which the communication bus is continuously occupied is greater than the first preset value and then detects that the duration for which the communication bus is continuously idle is greater than the second preset value. The sum of the duration required for the second communication unit to establish communication (which indicates the duration for communication configuration by the second communication unit, not including a duration required for the communication unit to be powered on and a duration required for other communication units to perform initialization) and the second preset value is less than an idle duration between two occupations of the communication bus, the second communication unit may establish communication in the idle duration between two occupations of the communication bus.

If the second communication units also need to send data to the communication bus, the time instants at which the second communication units send data to the communication bus are required to be significantly different from each other to ensure that the second communication unit to establish a communication is capable of recognizing the duration for which the communication bus is idle.

When the communication bus is occupied again, the first communication unit and the second communication unit after establishing communication both can receive a complete data packet, thereby avoiding that, when communication is just established, only partial data of a data packet is received from the communication bus, and the received partial data and partial data of a subsequent data packet are incorrectly determined as one data packet.

For example, given that an idle duration between two occupations of the communication bus is 10μs, it is indicated that after the communication bus is occupied by a communication unit, the communication bus is released for an idle duration of 10μs, then the communication bus is occupied again, that is, from the time instant when occupation of the communication bus by a communication unit for sending data is finished, a communication unit is allowed to send data to the communication bus after 10μs. It should be note that, communication units causing the two occupations of the communication bus may be the same communication unit or different communication units. As shown is Figure 4, in the duration that the communication bus is idle, if there is a communication unit establishing communication, the data packet subsequently received by the communication unit is a complete communication data packet.

As can be seen, with the communication method for a multi-machine communication system according to the this embodiment, by optimizing the time instant at which a communication unit establishes communication, an incorrectly determined data packet during communication of the communication system is avoided since communication is just established. The communication method according to the present embodiment has a good adaptability to a communication baud rate and a communication period of a communication system. In a system of a high communication baud rate and a high communication frequency, the method is advantageous in application, since reduction in communication real-time performance in the system, resulting from adopting the method for avoiding an incorrectly determined data packet based on a timer in the conventional technology, can be avoided.

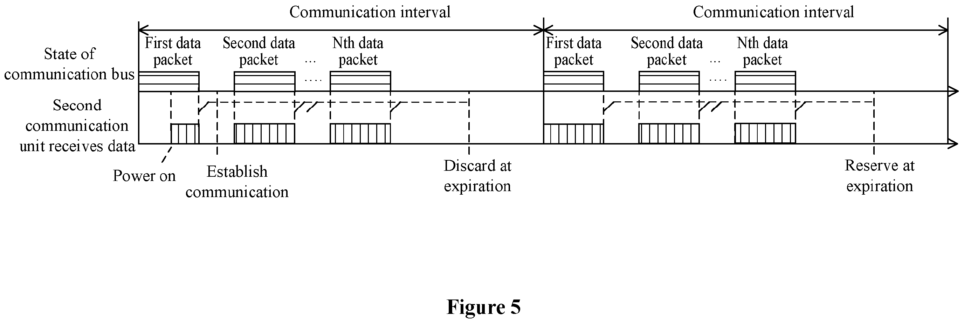

In some multi-machine communication systems, there may be a case that data sent by a communication unit has a great length, and is required to be sent in multiple packets. In this case, the communication method for a multi-machine communication system according to this embodiment may be applied for establishing communication. The integrity of a communication data packet may be determined by determining, after a time delay, whether data is completely received, as shown in Figure 5. A timer is started when a data packet is received by a communication unit; if no new data packet is received before the expiration of the timer, it is determined that data reception is finished; and if a new data packet is received before the expiration of the timer, the timer is restarted.

If it is determined that data reception is finished, it is determined whether received data is complete; if the received data is complete, the received data is stored; and if the received data is not complete, the received data is discarded.

Whether the received data is complete may be determined by: prestoring in a communication unit a length of a communication data packet of other communication units; when data sent by a communication unit is received, acquiring the length of the communication data packet of the communication unit, and determining whether the received data reaches the length of the communication data packet of the communication unit; and determining that the received data is complete if the received data reaches the length of the communication data packet of the communication unit.

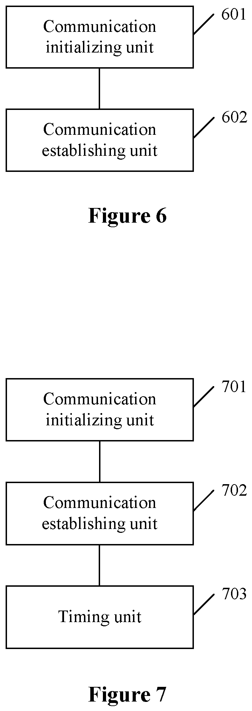

Based on the communication method for a multi-machine communication system according to the above embodiments, a communication device for a multi-machine communication system is provided according to the present embodiment. The communication device is arranged in a second communication unit, referring to Figure 6. The communication device includes a communication initializing unit 601 and a communication establishing unit 602.

The communication initializing unit 601 is configured to, after the second communication unit being powered on at a preset time instant, perform communication initialization.

The communication establishing unit 602 is configured to detect a state of the communication bus, and establish communication if it is detected that a duration for which the communication bus is continuously occupied is greater than a first preset value and then detected that a duration for which the communication bus is continuously idle is greater than a second preset value, where a sum of a duration required for the second communication unit to establish communication and the second preset value is less than an idle duration between two occupations of the communication bus

Referring to Figure 7, a communication device for a multi-machine communication system provided in a second communication is provided according to another embodiment. The device includes a communication initializing unit 701, a communication establishing unit 702 and a timing unit 703.

The communication initializing unit 701 is configured to, after the second communication unit being powered on at a preset time instant, perform communication initialization.

The communication establishing unit 702 is configured to detect a state of the communication bus, and establish communication if it is detected that a duration for which the communication bus is continuously occupied is greater than a first preset value and then detected that a duration for which the communication bus is continuously idle is greater than a second preset value, where a sum of a duration required for the second communication unit to establish communication and the second preset value is less than an idle duration between two occupations of the communication bus.

The timing unit 703 is configured to, when the second communication unit receives successive data packets from the communication bus, start a timer when a data packet is received by the second communication unit; determine that data reception is finished if no new data packet is received before expiration of the timer; restart the timer if a new data packet is received before expiration of the timer; determine whether received data is complete if it is determined that data reception is finished; store the received data if it is determined that the received data is complete; and discard the received data if it is determined that the received data is not complete.

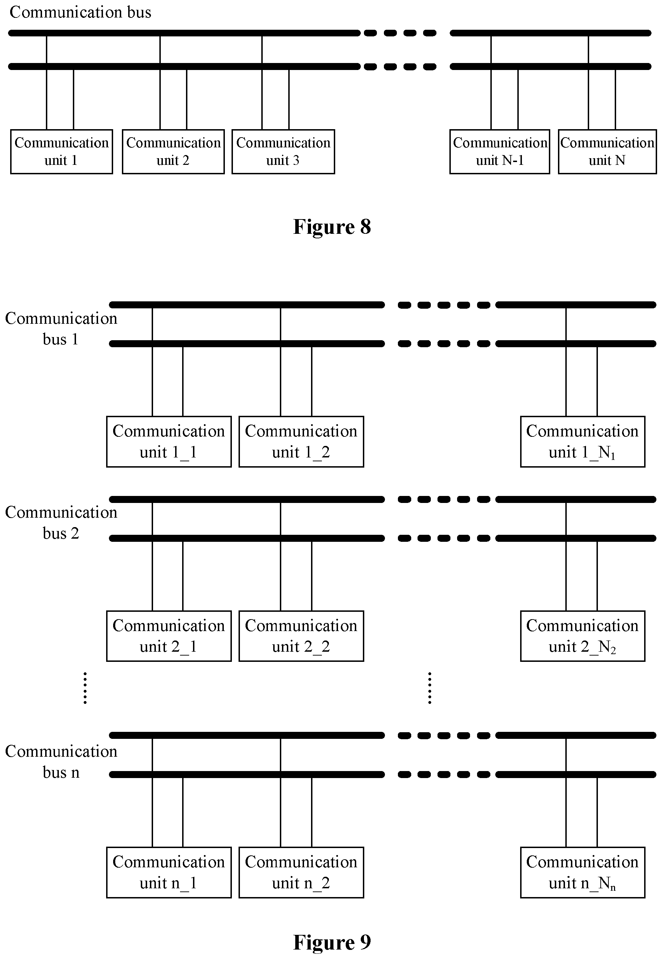

Based on the communication method for a multi-machine communication system according to the above embodiment, referring to Figure 8, a multi-machine communication system is provided according to the an embodiment. The multi-machine communication system includes a communication bus and multiple communication units connected with the communication bus.

The multiple communication units include a first communication unit and a second communication unit.

The first communication unit is selected from the multiple communication units to first establish communication and send data to the communication bus after initialization of the multi-machine communication system.

The second communication unit is one of the multiple communication units in the multi-machine communication system other than the first communication unit.

The second communication unit is configured to perform the following communication method for a multi-machine communication system:

after the second communication unit being powered on at a preset time instant, performing communication initialization; and

detecting a state of the communication bus, establishing communication if it is detected that a duration for which the communication bus is continuously occupied is greater than a first preset value and then detected that a duration for which the communication bus is continuously idle is greater than a second preset value, where a sum of a duration required for the second communication unit to establish communication and the second preset value is less than an idle duration between two occupations of the communication bus

Furthermore, the first preset value is set with the following method.

An upper computer in communication connection with the multi-machine communication system calculates a duration for which the communication bus is occupied when each communication unit sends data to the communication bus; and set the first preset value based the duration for which the communication bus is occupied when each communication unit sends data to the communication bus, where the first preset value is set to be less than the duration for which the communication bus is occupied when any one of the communication units sends data to the communication bus and to be greater than a duration for which the communication bus is occupied by an interference signal.

Furthermore, the duration for which the communication bus is occupied when each communication unit sends data to the communication bus is calculated with the following method.

For each of the communication units, the upper computer acquires a communication data format, a length of a communication data packet and a communication baud rate of the communication unit, and calculates the duration for which the communication bus is occupied when the communication unit sends data to the communication bus based on the communication data format, the length of the communication data packet and the communication baud rate of the communication unit.

Furthermore, each of the communication unit performs communication initialization with the following method.

The communication unit initializes a communication module of the communication unit and initializes communication establishing information.

Furthermore, each of the communication unit receives successive data packets from the communication bus by:

starting a timer when a data packet is received by the communication unit;

determining that data reception is finished if no new data packet is received before expiration of the timer;

restarting the timer if a new data packet is received before expiration of the timer;

determining, if it is determined that data reception is finished, whether received data is complete;

storing the received data if it is determined that the received data is complete; and

discarding the received data if it is determined that the received data is not complete.

The multi-machine communication system is provided according to this embodiment. In the multi-machine communication system, a communication unit is selected as a first communication unit and a communication unit other than the first communication unit functions as a second communication unit. After the first communication unit first establishes communication and sends data to the communication bus, the second communication unit establishes communication when it is detected that the communication bus is idle and after communication initialization. Since the first communication unit first establishes communication when the communication bus is not occupied, a complete communication data packet can be received. The second communication unit finishes establishing communication when the communication bus is idle, so that a complete communication data packet can be received when the communication bus is occupied again, thereby avoiding a communication unit establishing communication when the communication bus is occupied, such that the following problem can be avoided: only partial data of a data packet is received from the communication bus, and the received partial data is and partial data of a subsequent data packet are incorrectly determined as one data packet. Furthermore, by detecting if a duration for which the communication bus is continuously occupied is greater than a first preset value, it can be accurately determined if the communication bus is occupied, thereby avoiding incorrect determination in the state of the communication bus when the communication bus is occupied by an interference signal. Based on the above, when it is detected that a duration for which the communication bus is continuously idle is greater than a second preset value, it can be accurately determined that the communication bus is idle, and a sum of a duration required for the second communication unit to establish communication and the second preset value is less than an idle duration between two occupations of the communication bus, thereby ensuring that the second communication unit can finish establishing communication when the communication bus is idle.

Referring to Figure 9, a multi-machine communication system is provided according to another embodiment.

The system includes multiple communication buses and communication units connected with each of the communication bus.

For each of the multiple communication bus, a communication unit is selected from multiple communication units connected with the communication bus as a first communication unit, a communication unit among the multiple communication units other than the first communication unit functions as a second communication unit, the first communication unit is configured to first establish communication and send data to the communication bus after initialization of the multi-machine communication system, and the second communication unit is configured to perform a communication method for a multi-machine communication system, including:

after the second communication unit being powered on at a preset time instant, performing communication initialization; and

detecting a state of the communication bus, establishing communication if it is detected that a duration for which the communication bus is continuously occupied is greater than a first preset value and then detected that a duration for which the communication bus is continuously idle is greater than a second preset value, where a sum of a duration required for the second communication unit to establish communication and the second preset value is less than an idle duration between two occupations of the communication bus.

Furthermore, the first preset value is set with the following method.

An upper computer in communication connection with the multi-machine communication system calculates a duration for which the communication bus is occupied when each communication unit sends data to the communication bus; and set the first preset value based the duration for which the communication bus is occupied when each communication unit sends data to the communication bus, where the first preset value is set to be less than the duration for which the communication bus is occupied when any one of the communication units sends data to the communication bus and to be greater than a duration for which the communication bus is occupied by an interference signal.

Furthermore, the duration for which the communication bus is occupied when each communication unit sends data to the communication bus is calculated with the following method.

For each of the communication units, the upper computer acquires a communication data format, a length of a communication data packet and a communication baud rate of the communication unit, and calculates the duration for which the communication bus is occupied when the communication unit sends data to the communication bus based on the communication data format, the length of the communication data packet and the communication baud rate of the communication unit.

Furthermore, each of the communication unit performs communication initialization with the following method.

The communication unit initializes a communication module of the communication unit and initializes communication establishing information.

Furthermore, each of the communication unit receives successive data packets from the communication bus by:

starting a timer when a data packet is received by the communication unit;

determining that data reception is finished if no new data packet is received before expiration of the timer;

restarting the timer if a new data packet is received before expiration of the timer;

determining, if it is determined that data reception is finished, whether received data is complete;

storing the received data if it is determined that the received data is complete; and

discarding the received data if it is determined that the received data is not complete.

As can be seen, with the multi-machine communication system according to this embodiment, by optimizing a time instant at which a communication unit establishes communication, incorrectly determined data packets of a system is avoided since communication is just established.

**Claims**

1. A communication method for a multi-machine communication system, wherein the multi-machine communication system comprises a communication bus and a plurality of communication units connected with the communication bus, a communication unit is selected from the plurality of communication units in the multi-machine communication system as a first communication unit, a communication unit among the plurality of communication units other than the first communication unit functions as a second communication unit, the first communication unit first establishes communication and sends data to the communication bus after initialization of the multi-machine communication system, and the communication method is applied to the second communication unit, and the method comprises:

   after the second communication unit being powered on at a preset time instant, performing (S101) communication initialization; and
   detecting (SI02) a state of the communication bus, establishing communication if it is detected that a duration for which the communication bus is continuously occupied is greater than a first preset value and then detected that a duration for which the communication bus is continuously idle is greater than a second preset value, wherein

      a sum of a duration required for the second communication unit to establish communication and the second preset value is less than an idle duration between two occupations of the communication bus, and
      the first preset value is set by calculating a duration for which the communication bus is occupied when each of the plurality of communication units sends data to the communication bus, the first preset value being less than the duration for which the communication bus is occupied when any one of the plurality of communication units sends data to the communication bus and greater than a duration that the communication bus is occupied by an interference signal,
      the communication method is **characterized in that**:
      the duration for which the communication bus is occupied when each of the plurality of communication units sends data to the communication bus is calculated by: for each of the plurality of communication units, acquiring (S301) a communication data format, acquiring (S302) a length of a communication data packet, acquiring (S303) a communication baud rate of the communication unit, and calculating (S304) the duration for which the communication bus is occupied when the communication unit sends data to the communication bus based on the communication data format, the length of the communication data packet and the communication baud rate of the communication unit.

2. The communication method according to claim 1, wherein each of the plurality of communication units performs communication initialization by:
   initializing a communication module of the communication unit and initializing communication establishing information.

3. The communication method according to claim 1, wherein each of the plurality of communication unit receives successive data packets from the communication bus by:

   starting a timer when a data packet is received by the communication unit;
   determining that data reception is finished if no new data packet is received before expiration of the timer;
   restarting the timer if a new data packet is received before expiration of the timer;
   determining, if it is determined that data reception is finished, whether received data is complete;
   storing the received data if it is determined that the received data is complete; and

discarding the received data if it is determined that the received data is not complete.

4. A communication device for a multi-machine communication system, wherein the multi-machine communication system comprises a communication bus and a plurality of communication units connected with the communication bus, a communication unit is selected from the plurality of communication units in the multi-machine communication system as a first communication unit, a communication unit among the plurality of communication units other than the first communication unit functions as a second communication unit, the first communication unit first establishes communication and sends data to the communication bus after initialization of the multi-machine communication system, and the communication device is applied to the second communication unit, and comprises:

a communication initializing unit (601) configured to, after the second communication unit being powered on at a preset time instant, perform communication initialization; and

a communication establishing unit (602), configured to detect a state of the communication bus, and establish communication if it is detected that a duration for which the communication bus is continuously occupied is greater than a first preset value and then detected that a duration for which the communication bus is continuously idle is greater than a second preset value, wherein

a sum of a duration required for the second communication unit to establish communication and the second preset value is less than an idle duration between two occupations of the communication bus, and

the first preset value is set by calculating a duration for which the communication bus is occupied when each of the plurality of communication units sends data to the communication bus, the first preset value being less than the duration for which the communication bus is occupied when any one of the plurality of communication units sends data to the communication bus and greater than a duration that the communication bus is occupied by an interference signal,

the communication device is **characterized in that**:

the duration for which the communication bus is occupied when each of the plurality of communication units sends data to the communication bus is calculated by: for each of the plurality of communication units, acquiring a communication data format, acquiring a length of a communication data packet, acquiring a communication baud rate of the communication unit, and calculating the duration for which the communication bus is occupied when the communication unit sends data to the communication bus based on the communication data format, the length of the communication data packet and the communication baud rate of the communication unit.

5. The communication device according to claim 4, wherein the communication initializing unit (601) is configured to initialize a communication module of the second communication unit and initialize communication establishing information.

6. The communication device according to claim 4, further comprising:

a timing unit (703) configured to, when the second communication unit receives successive data packets from the communication bus,

start a timer when a data packet is received by the second communication unit;

determine that data reception is finished if no new data packet is received before expiration of the timer;

restart the timer if a new data packet is received before expiration of the timer;

determine whether received data is complete if it is determined that data reception is finished;

store the received data if it is determined that the received data is complete; and

discard the received data if it is determined that the received data is not complete.

7. A multi-machine communication system, comprising:

a communication bus and a plurality of communication units connected with the communication bus;

the plurality of communication units comprise a first communication unit and a second communication unit;

the first communication unit is selected from the plurality of communication units to first establish communication and send data to the communication bus after initialization of the multi-machine communication system;

the second communication unit is one of the plurality of communication units in the multi-machine communication system other than the first communication unit; and

the second communication unit is configured to perform the communication method for a multi-machine communication system according to any one of claims 1 to 3.

8.  A multi-machine communication system, comprising:

    a plurality of communication buses and communication units connected with each of the communication bus; and for each of the plurality of communication bus, a communication unit is selected from a plurality of communication units connected with the communication bus as a first communication unit, a communication unit among the plurality of communication units other than the first communication unit functions as a second communication unit, the first communication unit is configured to first establish communication and send data to the communication bus after initialization of the multi-machine communication system, and the second communication unit is configured to perform the communication method for a multi-machine communication system according to any one of claims 1 to 3.


**Patentansprüche**

1.  Kommunikationsverfahren für ein Mehrmaschinen-Kommunikationssystem, wobei das Mehrmaschinen-Kommunikationssystem einen Kommunikationsbus und eine Vielzahl von Kommunikationseinheiten aufweist, die an den Kommunikationsbus angeschlossen sind, wobei eine Kommunikationseinheit aus der Vielzahl der Kommunikationseinheiten in dem Mehrmaschinen-Kommunikationssystem als erste Kommunikationseinheit ausgewählt wird, eine Kommunikationseinheit aus der Vielzahl der Kommunikationseinheiten mit Ausnahme der ersten Kommunikationseinheit als zweite Kommunikationseinheit fungiert, die erste Kommunikationseinheit zuerst eine Kommunikation aufbaut und nach Initialisierung des Mehrmaschinen-Kommunikationssystems Daten an den Kommunikationsbus sendet, und das Kommunikationsverfahren auf die zweite Kommunikationseinheit angewendet wird, und das Verfahren umfasst:

    nachdem die zweite Kommunikationseinheit zu einem voreingestellten Zeitpunkt eingeschaltet wurde, Durchführen (S101) einer Kommunikationsinitialisierung; und
    Erfassen (S102) eines Zustands des Kommunikationsbusses, Aufbauen der Kommunikation, wenn erfasst wird, dass eine Zeitdauer, während der der Kommunikationsbus durchgehend belegt ist, länger ist als ein erster voreingestellter Wert, und dann erfasst wird, dass eine Zeitdauer, während der der Kommunikationsbus durchgehend inaktiv ist, länger ist als ein zweiter voreingestellter Wert, wobei
    eine Summe aus einer Zeitdauer, die die zweite Kommunikationseinheit benötigt, um die Kommunikation aufzubauen, und dem zweiten voreingestellten Wert kleiner ist als eine Leerlauf-Zeitdauer zwischen zwei Belegungen des Kommunikationsbusses, und
    der erste voreingestellte Wert festgelegt wird, indem eine Zeitdauer berechnet wird, während der der Kommunikationsbus belegt ist, wenn jede aus der Vielzahl der Kommunikationseinheiten Daten an den Kommunikationsbus sendet, wobei der erste voreingestellte Wert kleiner ist als die Zeitdauer, während der der Kommunikationsbus belegt ist, wenn eine beliebige aus der Vielzahl der Kommunikationseinheiten Daten an den Kommunikationsbus sendet, und größer ist als eine Zeitdauer, während der der Kommunikationsbus durch ein Interferenzsignal belegt ist,
    wobei das Kommunikationsverfahren **dadurch gekennzeichnet ist, dass**:
    die Zeitdauer, während der der Kommunikationsbus belegt ist, wenn jede aus der Vielzahl der Kommunikationseinheiten Daten an den Kommunikationsbus sendet, berechnet wird durch: für jede aus der Vielzahl der Kommunikationseinheiten, Beschaffen (S301) eines Kommunikationsdatenformats, Beschaffen (S302) einer Länge eines Kommunikationsdatenpakets, Beschaffen (S303) einer Kommunikationsbaudrate der Kommunikationseinheit, und Berechnen (S304) der Zeitdauer, während der der Kommunikationsbus belegt ist, wenn die Kommunikationseinheit Daten an den Kommunikationsbus sendet, auf der Grundlage des Kommunikationsdatenformats, der Länge des Kommunikationsdatenpakets und der Kommunikationsbaudrate der Kommunikationseinheit.

2.  Kommunikationsverfahren nach Anspruch 1, wobei jede aus der Vielzahl der Kommunikationseinheiten die Kommunikationsinitialisierung durchführt durch:
    Initialisieren eines Kommunikationsmoduls der Kommunikationseinheit und Initialisieren von Kommunikationsaufbauinformationen.

3.  Kommunikationsverfahren nach Anspruch 1, wobei jede aus der Vielzahl der Kommunikationseinheiten aufeinanderfolgende Datenpakete vom Kommunikationsbus empfängt durch:

    Starten eines Zeitgebers, wenn ein Datenpaket von der Kommunikationseinheit empfangen wird;

Feststellen, dass der Datenempfang beendet ist, wenn vor Ablauf des Zeitgebers kein neues Datenpaket empfangen wird;

Neustarten des Zeitgebers, wenn vor Ablauf des Zeitgebers ein neues Datenpaket empfangen wird;

wenn festgestellt wird, dass der Datenempfang beendet ist, Feststellen, ob die empfangenen Daten vollständig sind;

Speichern der empfangenen Daten, wenn festgestellt wird, dass die empfangenen Daten vollständig sind; und

Verwerfen der empfangenen Daten, wenn festgestellt wird, dass die empfangenen Daten nicht vollständig sind.

4. Kommunikationsvorrichtung für ein Mehrmaschinen-Kommunikationssystem, wobei das Mehrmaschinen-Kommunikationssystem einen Kommunikationsbus und eine Vielzahl von Kommunikationseinheiten aufweist, die an den Kommunikationsbus angeschlossen sind, wobei eine Kommunikationseinheit aus der Vielzahl der Kommunikationseinheiten in dem Mehrmaschinen-Kommunikationssystem als erste Kommunikationseinheit ausgewählt wird, eine Kommunikationseinheit aus der Vielzahl der Kommunikationseinheiten mit Ausnahme der ersten Kommunikationseinheit als zweite Kommunikationseinheit fungiert, die erste Kommunikationseinheit zuerst eine Kommunikation aufbaut und nach Initialisierung des Mehrmaschinen-Kommunikationssystems Daten an den Kommunikationsbus sendet, und die Kommunikationsvorrichtung auf die zweite Kommunikationseinheit angewendet wird, und aufweist:

eine Kommunikationsinitialisierungseinheit (601), die dafür ausgelegt ist, nachdem die zweite Kommunikationseinheit zu einem voreingestellten Zeitpunkt eingeschaltet wurde, eine Kommunikationsinitialisierung durchzuführen; und

eine Kommunikationsaufbaueinheit (602), die dafür ausgelegt ist, einen Zustand des Kommunikationsbusses zu erfassen und die Kommunikation aufzubauen, wenn erfasst wird, dass eine Zeitdauer, während der der Kommunikationsbus durchgehend belegt ist, länger ist als ein erster voreingestellter Wert, und dann erfasst wird, dass eine Zeitdauer, während der der Kommunikationsbus durchgehend inaktiv ist, länger ist als ein zweiter voreingestellter Wert, wobei

eine Summe aus einer Zeitdauer, die die zweite Kommunikationseinheit benötigt, um die Kommunikation aufzubauen, und dem zweiten voreingestellten Wert kleiner ist als eine Leerlauf-Zeitdauer zwischen zwei Belegungen des Kommunikationsbusses, und

der erste voreingestellte Wert festgelegt wird, indem eine Zeitdauer berechnet wird, während der der Kommunikationsbus belegt ist, wenn jede aus der Vielzahl der Kommunikationseinheiten Daten an den Kommunikationsbus sendet, wobei der erste voreingestellte Wert kleiner ist als die Zeitdauer, während der der Kommunikationsbus belegt ist, wenn eine beliebige aus der Vielzahl der Kommunikationseinheiten Daten an den Kommunikationsbus sendet, und größer ist als eine Zeitdauer, während der der Kommunikationsbus durch ein Interferenzsignal belegt ist,

wobei die Kommunikationsvorrichtung **dadurch gekennzeichnet ist, dass**:

die Zeitdauer, während der der Kommunikationsbus belegt ist, wenn jede aus der Vielzahl der Kommunikationseinheiten Daten an den Kommunikationsbus sendet, berechnet wird durch: für jede aus der Vielzahl der Kommunikationseinheiten, Beschaffen eines Kommunikationsdatenformats, Beschaffen einer Länge eines Kommunikationsdatenpakets, Beschaffen einer Kommunikationsbaudrate der Kommunikationseinheit und Berechnen der Zeitdauer, während der der Kommunikationsbus belegt ist, wenn die Kommunikationseinheit Daten an den Kommunikationsbus sendet, auf der Grundlage des Kommunikationsdatenformats, der Länge des Kommunikationsdatenpakets und der Kommunikationsbaudrate der Kommunikationseinheit.

5. Kommunikationsvorrichtung nach Anspruch 4, wobei die Kommunikationsinitialisierungseinheit (601) dafür ausgelegt ist, ein Kommunikationsmodul der zweiten Kommunikationseinheit zu initialisieren und Kommunikationsaufbauinformationen zu initialisieren.

6. Kommunikationsvorrichtung nach Anspruch 4, darüber hinaus aufweisend:

eine Zeitgebereinheit (703), die, wenn die zweite Kommunikationseinheit aufeinanderfolgende Datenpakete vom Kommunikationsbus empfängt, dafür ausgelegt ist,

einen Zeitgeber zu starten, wenn ein Datenpaket von der zweiten Kommunikationseinheit empfangen wird;

festzustellen, dass der Datenempfang beendet ist, wenn vor Ablauf des Zeitgebers kein neues Datenpaket empfangen wird;

den Zeitgeber neu zu starten, wenn vor Ablauf des Zeitgebers ein neues Datenpaket empfangen wird;

festzustellen, ob die empfangenen Daten vollständig sind, wenn festgestellt wird, dass der Datenempfang beendet ist;

die empfangenen Daten zu speichern, wenn festgestellt wird, dass die empfangenen Daten vollständig sind; und die empfangenen Daten zu verwerfen, wenn festgestellt wird, dass die empfangenen Daten nicht vollständig sind.

7.  Mehrmaschinen-Kommunikationssystem, aufweisend:

einen Kommunikationsbus und eine Vielzahl von Kommunikationseinheiten, die an den Kommunikationsbus angeschlossen sind;
wobei die Vielzahl der Kommunikationseinheiten eine erste Kommunikationseinheit und eine zweite Kommunikationseinheit aufweist;
wobei die erste Kommunikationseinheit aus der Vielzahl der Kommunikationseinheiten ausgewählt ist, um zuerst eine Kommunikation aufzubauen und nach Initialisierung des Mehrmaschinen-Kommunikationssystems Daten an den Kommunikationsbus zu senden;
wobei die zweite Kommunikationseinheit eine aus der Vielzahl der Kommunikationseinheiten in dem Mehrmaschinen-Kommunikationssystem ist, mit Ausnahme der ersten Kommunikationseinheit; und
wobei die zweite Kommunikationseinheit dafür ausgelegt ist, das Kommunikationsverfahren für ein Mehrmaschinen-Kommunikationssystem nach einem der Ansprüche 1 bis 3 durchzuführen.

8.  Mehrmaschinen-Kommunikationssystem, aufweisend:

eine Vielzahl von Kommunikationsbussen und Kommunikationseinheiten, die an jeden der Kommunikationsbusse angeschlossen sind; und
wobei für jeden aus der Vielzahl der Kommunikationsbusse eine Kommunikationseinheit aus einer Vielzahl von Kommunikationseinheiten, die an den Kommunikationsbus angeschlossen sind, als erste Kommunikationseinheit ausgewählt wird, eine Kommunikationseinheit aus der Vielzahl der Kommunikationseinheiten, mit Ausnahme der ersten Kommunikationseinheit, als zweite Kommunikationseinheit fungiert, die erste Kommunikationseinheit dafür ausgelegt ist, zuerst eine Kommunikation aufzubauen und nach Initialisierung des Mehrmaschinen-Kommunikationssystems Daten an den Kommunikationsbus zu senden, und die zweite Kommunikationseinheit dafür ausgelegt ist, das Kommunikationsverfahren für ein Mehrmaschinen-Kommunikationssystem nach einem der Ansprüche 1 bis 3 durchzuführen.

## Revendications

1.  Procédé de communication pour un système de communication multi-machine, sachant que le système de communication multi-machine comprend un bus de communication et une pluralité d'unités de communication connectées au bus de communication, une unité de communication est sélectionnée parmi la pluralité d'unités de communication dans le système de communication multi-machine comme première unité de communication, une unité de communication parmi la pluralité d'unités de communication autre que la première unité de communication fonctionne comme deuxième unité de communication, la première unité de communication établit d'abord la communication et envoie des données au bus de communication après initialisation du système de communication multi-machine, et le procédé de communication est appliqué à la deuxième unité de communication, et le procédé comprend :

après que la deuxième unité de communication a été mise en marche à un moment prédéfini, l'exécution (S101) d'une initialisation de communication ; et
la détection (S102) d'un état du bus de communication, l'établissement de la communication s'il est détecté qu'une durée pendant laquelle le bus de communication est continuellement occupé est supérieure à une première valeur prédéfinie et qu'il est ensuite détecté qu'une durée pendant laquelle le bus de communication est continuellement inactif est supérieure à une deuxième valeur prédéfinie, sachant que
une somme d'une durée nécessaire pour que la deuxième unité de communication établisse la communication et de la deuxième valeur prédéfinie est inférieure à une durée inactive entre deux occupations du bus de communication, et
la première valeur prédéfinie est réglée en calculant une durée pendant laquelle le bus de communication est occupé lorsque chacune de la pluralité d'unités de communication envoie des données au bus de communication, la première valeur prédéfinie étant inférieure à la durée pendant laquelle le bus de communication est occupé lorsque l'une quelconque de la pluralité d'unités de communication envoie des données au bus de communication et supérieure à une durée pendant laquelle le bus de communication est occupé par un signal d'interférence,

le procédé de communication est **caractérisé en ce que** :
la durée pendant laquelle le bus de communication est occupé lorsque chacune de la pluralité d'unités de communication envoie des données au bus de communication est calculée par : pour chacune de la pluralité d'unités de communication, acquérant (S301) un format de données de communication, acquérant (S302) une longueur d'un paquet de données de communication, acquérant (S303) un débit de communication en bauds de l'unité de communication, et calculant (S304) la durée pendant laquelle le bus de communication est occupé lorsque l'unité de communication envoie des données au bus de communication sur la base du format de données de communication, de la longueur du paquet de données de communication et du débit de communication en bauds de l'unité de communication.

2. Le procédé de communication selon la revendication 1, sachant que chacune de la pluralité d'unités de communication effectue l'initialisation de communication en :

initialisant un module de communication de l'unité de communication et initialisant des informations d'établissement de communication.

3. Le procédé de communication selon la revendication 1, sachant que chacune de la pluralité d'unités de communication reçoit des paquets de données successifs depuis le bus de communication en :

démarrant un temporisateur lorsqu'un paquet de données est reçu par l'unité de communication ;
déterminant que la réception de données est finie si aucun nouveau paquet de données n'est reçu avant expiration du temporisateur ;
redémarrant le temporisateur si un nouveau paquet de données est reçu avant expiration du temporisateur ;
déterminant, s'il est déterminé que la réception de données est finie, si les données reçues sont complètes ;
stockant les données reçues s'il est déterminé que les données reçues sont complètes ; et
rejetant les données reçues s'il est déterminé que les données reçues ne sont pas complètes.

4. Dispositif de communication pour un système de communication multi-machine, sachant que le système de communication multi-machine comprend un bus de communication et une pluralité d'unités de communication connectées au bus de communication, une unité de communication est sélectionnée parmi la pluralité d'unités de communication dans le système de communication multi-machine comme première unité de communication, une unité de communication parmi la pluralité d'unités de communication autre que la première unité de communication fonctionne comme deuxième unité de communication, la première unité de communication établit d'abord la communication et envoie des données au bus de communication après initialisation du système de communication multi-machine, et le dispositif de communication est appliqué à la deuxième unité de communication, et comprend :

une unité d'initialisation de communication (601) configurée pour, après que la deuxième unité de communication a été mise en marche à un moment prédéfini, effectuer l'initialisation de communication ; et
une unité d'établissement de communication (602), configurée pour détecter un état du bus de communication, et établir la communication s'il est détecté qu'une durée pendant laquelle le bus de communication est continuellement occupé est supérieure à une première valeur prédéfinie et qu'il est ensuite détecté qu'une durée pendant laquelle le bus de communication est continuellement inactif est supérieure à une deuxième valeur prédéfinie, sachant que
une somme d'une durée nécessaire pour que la deuxième unité de communication établisse la communication et de la deuxième valeur prédéfinie est inférieure à une durée inactive entre deux occupations du bus de communication, et
la première valeur prédéfinie est réglée en calculant une durée pendant laquelle le bus de communication est occupé lorsque chacune de la pluralité d'unités de communication envoie des données au bus de communication, la première valeur prédéfinie étant inférieure à la durée pendant laquelle le bus de communication est occupé lorsque l'une quelconque de la pluralité d'unités de communication envoie des données au bus de communication et supérieure à une durée pendant laquelle le bus de communication est occupé par un signal d'interférence,
le dispositif de communication est **caractérisé en ce que** :
la durée pendant laquelle le bus de communication est occupé lorsque chacune de la pluralité d'unités de communication envoie des données au bus de communication est calculée en : pour chacune de la pluralité d'unités de communication, acquérant un format de données de communication, acquérant une longueur d'un paquet de données de communication, acquérant un débit de communication en bauds de l'unité de communication, et calculant la durée pendant laquelle le bus de communication est occupé lorsque l'unité de communication envoie des données au bus de communication sur la base du format de données de communication, de la longueur du paquet de données de communication et du débit de communication en bauds de l'unité de communication.

5. Le dispositif de communication selon la revendication 4, sachant que l'unité d'initialisation de communication (601) est configurée pour initialiser un module de communication de la deuxième unité de communication et initialiser des informations d'établissement de communication.

6. Le dispositif de communication selon la revendication 4, comprenant en outre :

une unité de temporisation (703) configurée pour, lorsque la deuxième unité de communication reçoit des paquets de données successifs depuis le bus de communication,
démarrer un temporisateur lorsqu'un paquet de données est reçu par la deuxième unité de communication ;
déterminer que la réception de données est finie si aucun nouveau paquet de données n'est reçu avant expiration du temporisateur ;
redémarrer le temporisateur si un nouveau paquet de données est reçu avant expiration du temporisateur ;
déterminer si des données reçues sont complètes s'il est déterminé que la réception de données est finie ;
stocker les données reçues s'il est déterminé que les données reçues sont complètes ; et
rejeter les données reçues s'il est déterminé que les données reçues ne sont pas complètes.

7. Système de communication multi-machine, comprenant :

un bus de communication et une pluralité d'unités de communication connectées au bus de communication ;
sachant que la pluralité d'unités de communication comprend une première unité de communication et une deuxième unité de communication ;
la première unité de communication est sélectionnée parmi la pluralité d'unités de communication pour établir d'abord la communication et envoyer des données au bus de communication après initialisation du système de communication multi-machine ;
la deuxième unité de communication est une de la pluralité d'unités de communication dans le système de communication multi-machine autre que la première unité de communication ; et
la deuxième unité de communication est configurée pour effectuer le procédé de communication pour un système de communication multi-machine selon l'une quelconque des revendications 1 à 3.

8. Système de communication multi-machine, comprenant :

une pluralité de bus de communication et d'unités de communication connectées à chacun des bus de communication ; et
sachant que pour chacun de la pluralité de bus de communication, une unité de communication est sélectionnée parmi une pluralité d'unités de communication connectées au bus de communication comme première unité de communication, une unité de communication parmi la pluralité d'unités de communication autre que la première unité de communication fonctionne comme deuxième unité de communication, la première unité de communication est configurée pour établir d'abord la communication et envoyer des données au bus de communication après initialisation du système de communication multi-machine, et la deuxième unité de communication est configurée pour effectuer le procédé de communication pour un système de communication multi-machine selon l'une quelconque des revendications 1 à 3.

After the second communication unit being powered on at a preset time instant, perform communication initialization — S101

Detect a state of the communication bus, if it is detected that a duration for which the communication bus is continuously occupied is greater than a first preset value and then detected that a duration for which the communication bus is continuously idle is greater than a second preset value, establish communication, where a sum of a duration required for the second communication unit to establish communication and the second preset value is less than a duration between two occupations of the communication bus — S102

**Figure 1**

```
                                                                        ┌─ S201
┌──────────────────────────────────────────────────────┐
│        The second communication unit is powered on     │
└──────────────────────────────────────────────────────┘
                            │
                            ▼
                                                                        ┌─ S202
┌──────────────────────────────────────────────────────┐
│ The second communication unit initializes a communication module │
│            of the second communication unit             │
└──────────────────────────────────────────────────────┘
                            │
                            ▼
                                                                        ┌─ S203
┌──────────────────────────────────────────────────────┐
│   The second communication unit initializes communication │
│              establishing information                   │
└──────────────────────────────────────────────────────┘
```

Whether the second communication unit detects that the duration for which the communication bus is continuously occupied is greater than the first preset value — S204

No

Yes

Whether the second communication unit detects that the duration for which the communication bus is continuously idle is greater than a second preset value — S205

No

Yes

The second communication unit establishes communication — S206

**Figure 2**

For each communication unit, acquire a communication data format of the communication unit — S301

Acquire a length of a communication data packet of the communication unit — S302

Acquire a communication baud rate of the communication unit — S303

Calculate a duration for which the communication bus is occupied when the communication unit sends data to the communication bus based on the communication data format, the length of the communication data packet and the communication baud rate of the communication unit — S304

**Figure 3**

Communication interval    Communication interval

State of communication bus

Second communication unit receives data

Power on    Establish communication    Complete data packet

**Figure 4**

State of communication bus

Communication interval        Communication interval

First data packet    Second data packet  ···  Nth data packet      First data packet    Second data packet  ···  Nth data packet

Second communication unit receives data

Power on    Establish communication      Discard at expiration      Reserve at expiration

**Figure 5**

EP 3 739 820 B1

EP 3 739 820 B1

**Figure 6**

**Figure 7**

20

Communication bus

| Communication unit 1 | Communication unit 2 | Communication unit 3 | Communication unit N-1 | Communication unit N |

**Figure 8**

Communication bus 1

| Communication unit 1_1 | Communication unit 1_2 | Communication unit 1_$N_1$ |

Communication bus 2

| Communication unit 2_1 | Communication unit 2_2 | Communication unit 2_$N_2$ |

Communication bus n

| Communication unit n_1 | Communication unit n_2 | Communication unit n_$N_n$ |

**Figure 9**

**REFERENCES CITED IN THE DESCRIPTION**

**Patent documents cited in the description**

- US 20080273527 A1